# EUROPEAN PATENT APPLICATION

(11) **EP 4 546 038 A1**
(43) Date of publication of application: **30.04.2025**
(21) Application number: 24207462.3
(22) Date of filing: 18.10.2024
(51) Int. Cl.: G02F 1/1333, G02F 1/1335

(54) **LIQUID CRYSTAL DISPLAY**

(30) Priority: 26.10.2023 JP 2023183764
(71) Applicant: Alps Alpine Co., Ltd., Ota-ku, Tokyo 145-8501 (JP)
(72) Inventor: Sekime, Tomoaki, Iwaki-city Fukushima (JP)
(74) Representative: Schmitt-Nilson Schraud Waibel Wohlfrom Patentanwälte Partnerschaft mbB

(57) **Abstract**

A liquid crystal display includes: a liquid crystal module; a cover glass provided on the liquid crystal module; a light-shielding region formed on an outer periphery of a back surface side of the cover glass; and an anti-reflection layer formed on a front surface side of the cover glass. The anti-reflection layer includes a first anti-reflection layer corresponding to a display region for displaying an image and a second anti-reflection layer corresponding to the light-shielding region. A reflectance generated at a front surface of the second anti-reflection layer is greater than a reflectance generated at a front surface of the first anti-reflection layer.

## Description

The present disclosure relates to a liquid crystal display, and more particularly to a seamless boundary between a display region for displaying an image and a light-shielding region.

The liquid crystal display includes a liquid crystal module housed in a housing, and the liquid crystal module includes a liquid crystal panel and a protective cover mounted on a front surface of the liquid crystal panel. The liquid crystal display includes a display region (active area) for displaying an image and a light-shielding region surrounding the display region, and what is known as a black mask for defining the light-shielding region is formed on an outer periphery of the protective cover. The black mask is, for example, a region in which black color is printed on the protective cover. For example, in the liquid crystal display disclosed in JP 2019-15772A, the black mask is prevented from being conspicuous by providing an intermediate layer such as a checkered pattern on the black mask.

The present disclosure relates to a liquid crystal display according to the appended claims. Embodiments are disclosed in the dependent claims. A liquid crystal display according to an aspect of the present disclosure includes: a liquid crystal module; a cover glass provided on the liquid crystal module; a light-shielding region formed on an outer periphery of a back surface side of the cover glass; and an anti-reflection layer formed on a front surface side of the cover glass. The anti-reflection layer includes a first anti-reflection layer corresponding to a display region for displaying an image and a second anti-reflection layer corresponding to the light-shielding region, and a reflectance generated at a front surface of the second anti-reflection layer is greater than that generated on a front surface of the first anti-reflection layer.

In one embodiment, reflectances of the first and second anti-reflection layers are determined such that a sum of the reflectance generated at the interface of the light-shielding region and the reflectance generated at the front surface of the second anti-reflection layer is approximately equal to a sum of the reflectance generated at the interface of each layer in the liquid crystal module of the display region and the reflectance generated at the front surface of the first anti-reflection layer. In one embodiment, the reflectance generated at the interface of each layer in the liquid crystal module includes the reflectance generated at the interface of a shield electrode and a glass substrate, the reflectance generated at the interface of the glass substrate and the liquid crystal panel, and the reflectance generated at the interface of the liquid crystal panel and a TFT substrate.

A liquid crystal display according to a further aspect of the present disclosure includes a liquid crystal module, a cover glass provided on the liquid crystal module, a light shielding region formed on an outer periphery of a back surface side of the cover glass, an adhesive portion formed on a front surface side of the cover glass, and an anti-reflection layer formed on the adhesive portion. The adhesive portion includes a first adhesive portion corresponding to a display region for displaying an image and a second adhesive portion corresponding to the light shielding region, and a reflectance generated at an interface between the second adhesive portion and the anti-reflection layer is greater than the reflectance generated at the interface between the first adhesive portion and the anti-reflection layer.

In one embodiment, the reflectances of the first and second adhesive portions are determined such that a sum of the reflectance generated at the interface of the light shielding region, the reflectance generated at the interface of the second adhesive portion, and the reflectance generated at the front surface of the anti-reflection layer is approximately equal to a sum of the reflectance generated at the interface of each layer in the liquid crystal module of the display region, the reflectance generated at the interface of the first adhesive portion, and the reflectance generated at the front surface of the anti-reflection layer. In one embodiment, the reflectance generated at the interface of each layer in the liquid crystal module includes the reflectance generated at the interface between the glass substrate and the liquid crystal panel, and the reflectance generated at the interface between the liquid crystal panel and the TFT substrate. In one embodiment, the shield electrode is formed of an organic conductive film, and the reflectance generated at the interface between the shield electrode and the glass substrate is suppressed.
FIG. 1 is a diagram illustrating a cross-sectional view of a schematic configuration of an existing liquid crystal display;
FIG. 2A is diagram illustrating a schematic plan view of a liquid crystal display according to a first embodiment of the present disclosure;
FIG. 2B is a diagram illustrating a schematic cross-sectional view taken along a line A-A;
FIGS. 3A, 3B, 3C, and 3D are diagrams illustrating cross-sectional views of one example of a method of manufacturing an anti-reflection layer according to the first embodiment; and
FIGS. 4A and 4B are diagrams illustrating schematic cross-sectional views of a liquid crystal display according to a second embodiment of the present disclosure.

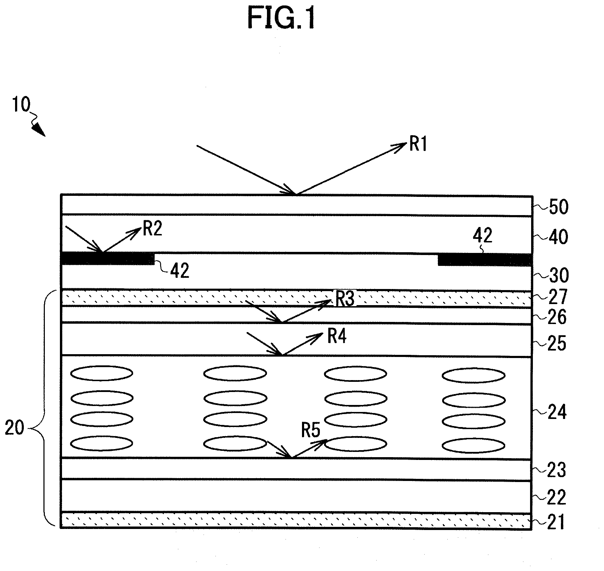

FIG. 1 is a diagram illustrating a schematic cross section of an existing liquid crystal display. A liquid crystal display 10 includes a liquid crystal module 20, a cover glass 40 provided on the liquid crystal module 20 via an optical clear film (optically clear resin (OCR)) or an optical clear adhesive (optically clear adhesive (OCA)) 30, and an anti-reflection (AR) layer or an anti-static film (ASF) 50 formed on a front surface of the cover glass 40.

The liquid crystal module 20 is formed by laminating, in the order from the bottom, a polarizing plate 21, a glass substrate 22, an array (AR) substrate with a thin film transistor (TFT) 23 (hereinafter, also referred to as TFT substrate) formed on the glass substrate 22, a liquid crystal panel 24 including an RGB filter and liquid crystal molecules, a glass substrate 25, a shield electrode 26, and a polarizing plate 27. A backlight (illustration omitted) is arranged below the liquid crystal module 20.

The liquid crystal panel 24 is, for example, of an IPS type in which the liquid crystal molecules rotate in a horizontal direction relative to the liquid crystal panel by a voltage applied via the TFT. Normally, in the IPS type, the shield electrode 26 for discharging an electric charge charged above the liquid crystal panel 24 to a GND (reference potential) is arranged between the glass substrate 25 and the polarizing plate 27. The shield electrode 26 is made of, for example, a light-transmitting transparent metal material such as indium tin oxide (ITO).

A black mask 42 is formed on an outer periphery of the cover glass 40 so as to surround an active area for displaying an image. The black mask 42 is formed, for example, by screen printing a black pigment on a bottom surface of the cover glass 40, and the black mask 42 defines a light-shielding region.

In the liquid crystal display 10, the following reflections are generated by light from above (that is, when the liquid crystal display is viewed from above), a reflectance of the front surface, and the reflectance of an interface of each layer.
R1: reflection at the front surface of the anti-reflection film/anti-static film 50; reflectance = about 0.3%,
R2: reflection at the interface of the black mask 42; reflectance = about 0.2%,
R3: reflection at the interface of the shield electrode 26 and the glass substrate 25; reflectance = about 0.7%,
R4: reflection at the interface of the glass substrate 25 and the liquid crystal panel 24; reflectance = about 0.2%, and
R5: reflection at the interface of the liquid crystal panel 24 and a TFT substrate 23; reflectance = about 0.2%.

Since refractive indices of the polarizing plate, the OCA, and the glass are approximately 1.5, reflection at the interface due to a refractive index difference hardly occurs.

A reflectance R_{A} of the active area is R_{A} = R1 + R3 + R4 + R5 ≈ 1.4%, and a reflectance R_{B} of a black mask area is R_{B} = R1 + R2 ≈ 0.5%.

Accordingly, there is an issue that the reflectance R_{A} of the active area is higher than the reflectance R_{B} of the black mask area and thus their boundary being conspicuous. Conventionally, in order to make this boundary less visible, a method has been employed in which the reflectance R_{B} of the black mask area is increased, the reflectance R_{A} of the active area is decreased, or the reflectances of both are changed.

In an existing method, the pigment is adjusted in order to increase the reflectance R_{B} of the black mask area, but there is a limit to the pigment adjustment for reasons such as reliability and material restriction due to color, and the reflectance cannot be increased very much. On the other hand, in order to decrease the reflectance R_{A} of the active area, it is also possible to change the metal material (for example, ITO) of the shield electrode 26 to an organic conductive material (for example, conductive plastics, etc.), but in doing so, a resistance value of the shield electrode 26 becomes high, and discharge of the electric charge by electrical static discharge (ESD) may become insufficient.

According to an aspect of the present disclosure, a liquid crystal display in which a boundary between a display region for displaying an image and a light-shielding region is made seamless is provided.

Embodiments of the present disclosure will now be described. The present disclosure is particularly applied to a liquid crystal display including a touch panel function as a user interface and a liquid crystal display including a function for detecting proximity of a user's finger or the like using infrared rays or the like, in addition to a liquid crystal display having a general image display function.

Next, one embodiment of the present disclosure will be described with reference to the drawings. It should be noted that a scale of the drawings is exaggerated to facilitate understanding of the disclosure and does not necessarily represent the scale of an actual product.

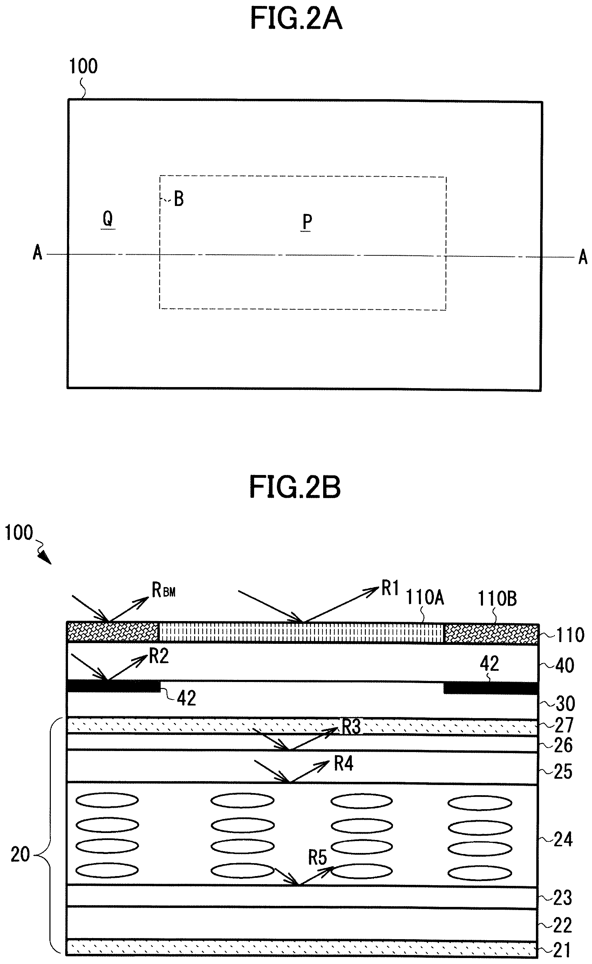

FIG. 2A is a diagram illustrating a schematic plan view of a liquid crystal display according to a first embodiment of the present disclosure. FIG. 2B is a diagram illustrating a schematic cross-sectional view taken along the line A-A. A liquid crystal display 100 according to the present embodiment is formed by housing a backlight and a liquid crystal module 20 in a substantially rectangular housing. As illustrated in FIG. 2A, when viewed from above, the liquid crystal display 100 includes a rectangular active area (display region) P for displaying an image, and a light-shielding area Q surrounding an outer periphery of the active area P. The light-shielding area Q is a non-display region in which no image is displayed. When a touch panel is mounted on the liquid crystal display 100, the active area P is also a touch-operable area. A broken line B (boundary B) virtually indicates a boundary between the active area P and the light-shielding area Q, but in practice, such the boundary B cannot be visually recognized or, even when possible, is almost inconspicuous.

The liquid crystal display 100 includes the liquid crystal module 20 as illustrated in FIG. 2B. The liquid crystal module 20 is configured in a same manner as the liquid crystal module 20 as illustrated in FIG. 1. That is, the liquid crystal module 20 is configured by laminating, in the order from the bottom, the polarizing plate 21, the glass substrate 22, the AR substrate with TFT 23 (hereinafter, also referred to as TFT substrate) formed on the glass substrate 22, the liquid crystal panel 24 including the RGB filter and the liquid crystal molecules, the glass substrate 25, the shield electrode 26, and the polarizing plate 27. The liquid crystal panel 24 is of the IPS type in which liquid crystal molecules rotate in the horizontal direction relative to the liquid crystal panel by the voltage applied via the TFT, for example.

The cover glass (protective glass) 40 is mounted on the polarizing plate 27 of the liquid crystal module 20 via the optical clear film (OCR) or the optical clear adhesive (OCA) 30. The black mask 42 defining the light-shielding area Q is formed on the back side of the cover glass 40 by screen printing or the like.

An anti-reflection layer 110 is formed on the front surface side of the cover glass 40. The anti-reflection layer 110 includes a first anti-reflection layer 110A having a shape corresponding to the active area P and the black mask 42. A second anti-reflection layer 110B has a shape corresponding to the light-shielding area Q. The second anti-reflection layer 110B is configured so that the reflectance of the front surface of the second anti-reflection layer 110B is greater than that of the first anti-reflection layer 110A. More specifically, the reflectance R1 of the first anti-reflection layer 110A and the reflectance R_{BM} of the second anti-reflection layer 110B are adjusted so that the reflectance R_{A} (R_{A} = R1 + R3 + R4 + R5) of the active area and the reflectance R_{B} (R_{B} = R_{BM} + R2) of the black mask area are approximately equal to each other or a difference between the two reflectances is small (RA ≈ R_{B}).

The cover glass 40 normally has a reflectance of 3% to 4%, but the reflectance of the cover glass 40 is reduced by forming the anti-reflection layer 110. The first anti-reflection layer 110A is, although materials or thickness thereof is not particularly limited, formed of a single layer film or a multilayer film, and in a case of the multilayer film, a high reflectance can be reduced by alternately laminating, for example, a low refractive material (e.g., MgF₂, SiO₂, Al₂O₃, etc.) and a high refractive material (e.g., ZrO₂, CeO₂, ZnS, etc.). The first anti-reflection layer 110A is formed, for example, by depositing, sputtering, and applying a material to the front surface of the cover glass 40. For example, the reflectance of the front surface of the first anti-reflection layer 110A is R1 ≈ 0.3%, consistent with the anti-reflection layer of the liquid crystal display 10 as illustrated in FIG. 1.

The second anti-reflection layer 110B is formed of, for example, a resin or paint of hollow nanosilica, although materials or film thickness of the second anti-reflection layer 110B is not particularly limited. For example, the reflectance R_{BM} of the second anti-reflection layer 110B is R_{BM} ≈ 1.2% when the reflectance R1 of the first anti-reflection layer 110A is ≈ 0.3%.

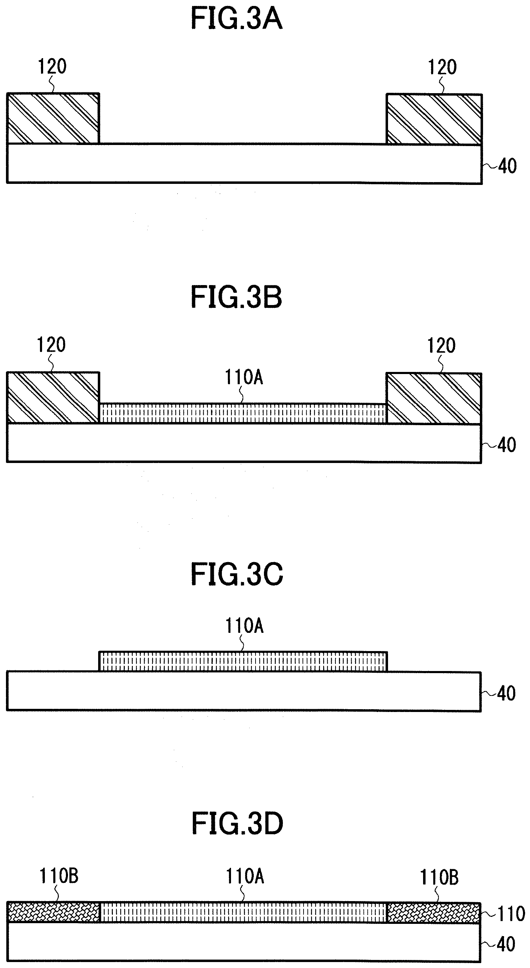

FIGS. 3A, 3B, 3C, and 3D are diagrams illustrating one example of a method of manufacturing the first anti-reflection layer 110A and the second anti-reflection layer 110B. As illustrated in FIG. 3A, a mask member 120 patterned so as to expose the active area P is formed on the cover glass 40, and then, as illustrated in FIG. 3B, a material for forming the first anti-reflection layer 110A is deposited on the area exposed by the mask member 120. Then, as illustrated in FIG. 3C, after the mask member 120 is removed, as illustrated in FIG. 3D, a material for forming the second anti-reflection layer 110B is applied to an area surrounding the first anti-reflection layer 110A. As a result, the anti-reflection layer 110 having the first anti-reflection layer 110A corresponding to the active area P and the second anti-reflection layer 110B corresponding to the light-shielding area Q, which are two anti-reflection layers having different reflectances, is formed on the cover glass 40.

In the liquid crystal display 100 configured as described above, the reflectance when viewed from above is determined by the reflectance of the front surface and the reflectance of the interface. The reflectance R_{A} of the active area is R_{A} = R1 (0.3%) + R3 (0.7%) + R4 (0.2%) + R5 (0.2%) = 1.4%. Whereas, the reflectance R_{B} of the black mask area is R_{B} = R_{BM} (1.2%) + R2 (0.2%) =1.4%, so that the reflectance R_{A} of the active area is almost equal to the reflectance R_{B} of the black mask area. Thus, by eliminating the reflectance difference between the active area and the black mask area, the boundary B between the active area P and the light-shielding area Q is made inconspicuous, and the boundary B can be made seamless.

Next, a second embodiment of the present disclosure will be described. In the first embodiment, the first anti-reflection layer 110A and the second anti-reflection layer 110B having different refractive indices are formed on the cover glass 40. In the second embodiment, adhesives having different refractive indices are formed on the cover glass 40, and the anti-reflection layer is formed on the adhesives.

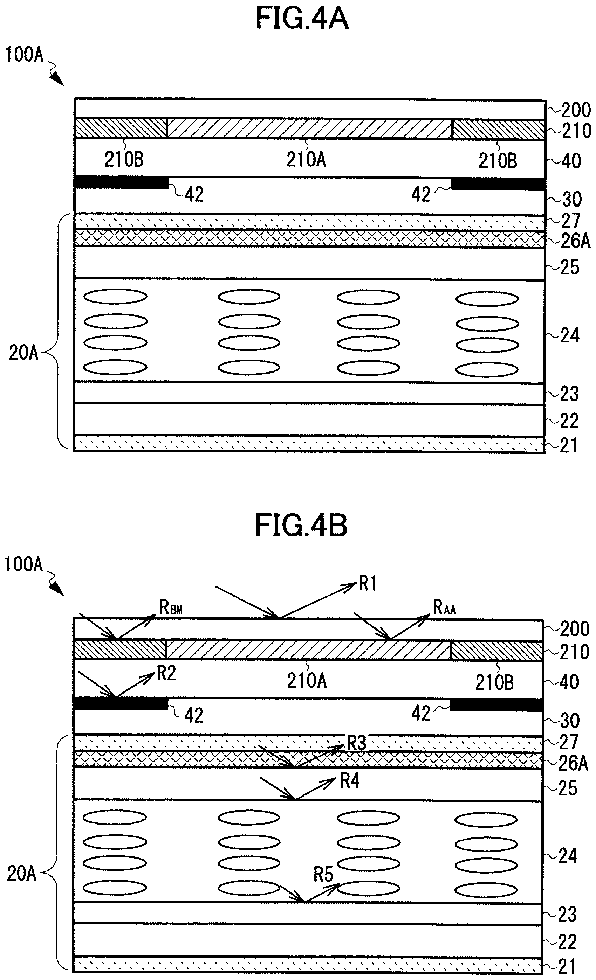

FIGS. 4A and 4B are diagrams illustrating cross-sectional views of a schematic configuration of a liquid crystal display according to the second embodiment, and the same reference numerals are given to the same components as those illustrated in FIG. 2B. As illustrated in FIG. 4A, in a liquid crystal display 100A according to the second embodiment, a film, anti-reflection film 200 is adhered to the front surface of the cover glass 40 via an adhesive 210.

The adhesive 210 includes a first adhesive portion 210A having a shape corresponding to the active area P and a second adhesive portion 210B having a shape corresponding to the light-shielding area Q or the black mask 42. The second adhesive portion 210B is configured to have a greater reflectance at the interface than the first adhesive portion 210A. FIG. 4B is a diagram illustrating reflectances in addition to FIG. 4A, and more specifically, the reflectance R_{AA} of the first adhesive portion 210A and the reflectance R_{BM} of the second adhesive portion 210B are adjusted so that the reflectance R_{A} (R_{A} = R1 + R_{AA} + R3 + R4 + R5) of the active area and the reflectance R_{B} (R_{B} = R_{BM} + R2) of the black mask area are approximately equal to each other or the difference between the two reflectances is small (R_{A} ≈ R_{B}).

The material and film thickness of the anti-reflection film 200 are not particularly limited, but are, for example, configured in a same manner as the first anti-reflection layer 110A in the first embodiment. The material and film thickness of the first adhesive portion 210A are not particularly limited, but an acrylic adhesive material is used, for example. The acrylic adhesive material usually has a refractive index of 1.49, and the reflectance R_{AA} at the interface with the anti-reflection film 200 is R_{AA} ≈ 0.01%. The material and film thickness of the second adhesive portion 210B are not particularly limited, but a silicone-based adhesive is used, for example. The silicone-based adhesive usually has a refractive index of 1.4, and the reflectance R_{BM} at the interface with the anti-reflection film 200 is R_{BM} ≈ 0.17%.

The first adhesive portion 210A and the second adhesive portion 210B can be applied to the front surface of the cover glass 40 by any method, and after the application, the anti-reflection film 200 is stuck on the first adhesive portion 210A and second adhesive portion 210B. On the contrary, the first adhesive portion 210A and second adhesive portion 210B may be applied to the back surface of the anti-reflection film 200 and stuck on the front surface of the cover glass 40.

In the second embodiment, a shield electrode 26A of a liquid crystal module 20A is formed of an organic conductive film such as a conductive plastic. When a metal material such as ITO is used for the shield electrode, since the refractive index of ITO is high, the reflectance R3 at the interface with the glass substrate 25 is high (in the example of FIG. 2B, R3 ≈ 0.7%). However, in the case of the organic conductive material, the refractive index is smaller than that of the metal material, and the reflectance R3 at the interface with the glass substrate 25 can be made to be almost zero or mostly suppressed.

When the liquid crystal display 100A of the second embodiment is viewed from above, the reflectance R_{A} of the active area is R_{A} = R1 (0.3%) + R_{AA} (0.01% ) + R3 (0%) + R4 (0.2%) + R5 (0.2%) =0.71%, and the reflectance R_{B} of the black mask area is R_{B} = R1 (0.3%) + R_{BM} (0.17%) +R2 (0.2%) = 0.67%. When the shield electrode 26A is made of an organic conductive material, the reflectance R3 ≈ 0%. Thus, the reflectance R_{A} of the active area and the reflectance R_{B} of the black mask area can be made approximately the same level.

Thus, in the second embodiment, by changing the refractive index of the adhesive material corresponding to the display region and the refractive index of the adhesive material corresponding to the light-shielding region, it is possible to use a material having a uniform refractive index such as the anti-reflection film, thereby facilitating the manufacturing process and reducing the cost. In addition, as in the first embodiment, by eliminating the reflectance difference between the active area P and the light-shielding area Q, the boundary B can be made inconspicuous and thus seamless.

In the above embodiment, an example in which the liquid crystal module includes an IPS type liquid crystal panel is exemplified, but the liquid crystal module is not limited thereto, and a VA type or TN type liquid crystal panel may be used. Although the first embodiment and the second embodiment have been described separately, the present disclosure may include a combination of the first embodiment and the second embodiment.

According to the present disclosure, by making the reflectance generated at the front surface of the second anti-reflection layer corresponding to the light-shielding region greater than the reflectance generated at the front surface of the first anti-reflection layer corresponding to the display region, a reflectance difference between the light-shielding region and the display region is reduced, and a boundary between the light-shielding region and the display region can be made inconspicuous and thus seamless. Further, according to the present disclosure, by making the reflectance generated at the interface of the second adhesive portion corresponding to the light-shielding region greater than the reflectance generated at the interface of the first adhesive portion corresponding to the display region, the reflectance difference between the light-shielding region and the display region is reduced, and the boundary between the light-shielding region and the display region can be made inconspicuous and thus seamless.

Although embodiments of the present invention have been described in detail above, the present invention is not limited to these embodiments, and various changes and modifications are possible within the scope of the claims.

## Claims

1. A liquid crystal display, comprising:
a liquid crystal module;
a cover glass provided on the liquid crystal module;
a light-shielding region formed on an outer periphery of a back surface side of the cover glass; and
an anti-reflection layer formed on a front surface side of the cover glass, wherein
the anti-reflection layer includes a first anti-reflection layer corresponding to a display region for displaying an image and a second anti-reflection layer corresponding to the light-shielding region, and
a reflectance generated at a front surface of the second anti-reflection layer is greater than a reflectance generated at a front surface of the first anti-reflection layer.

2. The liquid crystal display according to claim 1, wherein
reflectances of the first anti-reflection layer and the second anti-reflection layer are determined such that a sum of the reflectance generated at an interface of the light-shielding region and the reflectance generated at the front surface of the second anti-reflection layer is approximately equal to a sum of reflectances generated at interfaces of each layer in the liquid crystal module of the display region and the reflectance generated at the front surface of the first anti-reflection layer.

3. The liquid crystal display according to claim 2, wherein
the reflectances generated at the interfaces of each layer in the liquid crystal module include a reflectance generated at the interface of a shield electrode and a glass substrate, a reflectance generated at the interface of the glass substrate and a liquid crystal panel, and a reflectance generated at the interface of the liquid crystal panel and a TFT substrate.

4. A liquid crystal display, comprising:
a liquid crystal module;
a cover glass provided on the liquid crystal module;
a light shielding region formed on an outer periphery of a back surface side of the cover glass;
an adhesive portion formed on a front surface side of the cover glass; and
an anti-reflection layer formed on the adhesive portion, wherein
the adhesive portion includes a first adhesive portion that corresponds to a display region for displaying an image and a second adhesive portion that corresponds to the light shielding region, and
a reflectance generated at an interface between the second adhesive portion and the anti-reflection layer is greater than a reflectance generated at an interface between the first adhesive portion and the anti-reflection layer.

5. The liquid crystal display according to claim 4, wherein
reflectances of the first adhesive portion and the second adhesive portion are determined such that a sum of the reflectance generated at an interface of the light shielding region, the reflectance generated at the interface of the second adhesive portion, and a reflectance generated at a front surface of the anti-reflection layer is approximately equal to a sum of reflectances generated at interfaces of each layer in the liquid crystal module of the display region, the reflectance generated at the interface of the first adhesive portion, and the reflectance generated at the front surface of the anti-reflection layer.

6. The liquid crystal display according to claim 5, wherein
the reflectances generated at the interfaces of each layer in the liquid crystal module include a reflectance generated at an interface of a glass substrate and a liquid crystal panel, and a reflectance generated at an interface of the liquid crystal panel and a TFT substrate.

7. The liquid crystal display according to claim 6, wherein
a shield electrode is formed of an organic conductive film, and
the reflectance generated at the interface between the shield electrode and the glass substrate is suppressed.
